# EUROPEAN PATENT APPLICATION

(11) **EP 2 399 701 A1**
(43) Date of publication of application: **28.12.2011**
(21) Application number: 10840217.3
(22) Date of filing: 30.06.2010
(51) Int. Cl.: B23K 9/12, B23K 9/235, B23K 33/00

(54) **WELDING GROOVE JOINING METHOD, DOUBLE-WIRE WELDING METHOD AND SYSTEM THEREOF**

(30) Priority: 30.04.2010 CN 201010162633
(71) Applicant: Tangshan Railway Vehicle Co., Ltd, Tangshan, Hebei 063035 (CN)
(72) Inventor: LIU, Zhiping, Tangshan, Hebei 063035 (CN); HU, Wenhao, Tangshan, Hebei 063035 (CN); WANG, Xiuyi, Tangshan, Hebei 063035 (CN); LIU, Chunning, Tangshan, Hebei 063035 (CN)
(74) Representative: Pfenning, Meinig & Partner GbR
(86) International application number: PCT/CN2010/074805
(87) International publication number: WO 2011/134199

(57) **Abstract**

The invention provides an overlapping method of welding groove, a twin wire welding method and a system thereof. The twin wire welding method comprises the steps of: setting a tracking angle range of a tracking sensor according to a groove angle, wherein the tracking angle range comprises the groove angle which is an angle of a welding groove by overlapping an upper profile and a lower profile; setting a welding angle of a welding torch according to the groove angle, wherein the welding torch comprises a first welding wire and a second welding wire, the first welding wire is connected to voltage used for root penetrating, and the second welding wire is connected to voltage used for surface filling; controlling the welding torch not to open an arc, and verifying whether the welding angle is correct along the welding groove under the guidance of the tracking sensor; controlling the welding torch to open the arc and welding along the welding track of the welding groove according to the verified welding angle if so. The technical scheme of the invention overcomes the technical defects of inconvenient welding by the welding torch caused by the fact that the welding angle of the welding groove is appropriately a right angle or an acute angle in the prior art.

## Description

### FIELD OF THE TECHNOLOGY

The invention relates to welding technology field, and more particularly to an overlapping method of a welding groove, a twin wire welding method and a system.

### BACKGROUND

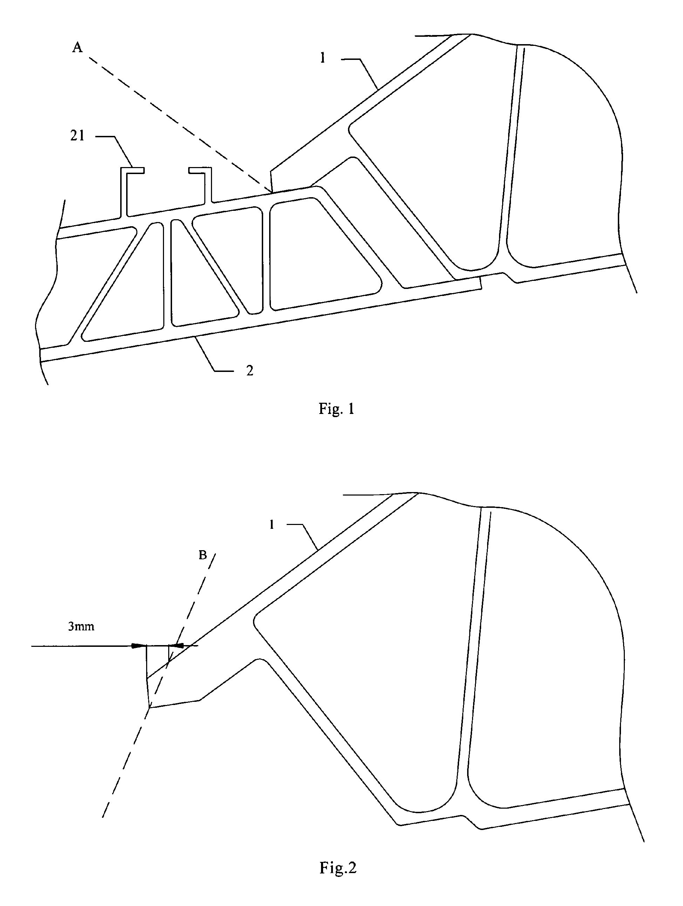

In practical application, two profiles are usually connected together by welding. But after a welding groove is formed by the two profiles which need to be welded together, the welding groove is not convenient for a welding torch to weld due to the angle of the welding groove, so it brings some trouble for construction. Specifically, referring to Fig. 1 which shows an assembling structural schematic view of two profiles which need to be welded together in prior art, a welding groove is formed by assembling an upper profile 1 and a lower profile 2 in lapping form and the angle of the welding groove is appropriately a right angle. In the process of welding, the welding can be normally done when the central line of a welding torch reaches dashed line A. However, since the welding torch has its own width, the welding torch is obstructed by a U-shaped groove 21 arranged on the lower profile 2 before it reaches to the dashed line A.

Therefore, as for the groove with a right angle or an acute angel which is not convenient for the welding torch to weld, for being convenient for the welding torch to weld, this type of groove needs to be perfected and the perfected groove should be welded by adapting a suitable welding method so as to ensure weld penetration and surface filling of a welding seam.

### SUMMARY

The invention provides an overlapping method of a welding groove, a twin wire welding method and a system thereof, which is for overcoming the technical defects of inconvenient welding by the welding torch caused by the fact that the welding angle of the welding groove is appropriately the right angle or the acute angle in the prior art.

The invention provides an overlapping method of a welding groove, which comprises:

overlapping an upper profile and a lower profile in advance to form a preset welding groove;

determining whether the preset welding groove obstructs a welding torch to weld, and marking an overlap line of the upper profile and the lower profile on the upper profile if the preset welding groove does not obstruct the welding torch to weld;

separating the upper profile and the lower profile and processing the upper profile along the overlap line according to the preset welding groove; and

overlapping the lower profile and the processed upper profile to form a welding groove.

The invention provides a twin wire welding method, which comprises:

setting a tracking angle range of a tracking sensor according to a groove angle, wherein the tracking angle range comprises the groove angle which is an angle of a welding groove by overlapping an upper profile and a lower profile;

setting a welding angle of a welding torch according to the groove angle, wherein the welding torch comprises a first welding wire and a second welding wire, the first welding wire is connected to voltage used for root penetrating, and the second welding wire is connected to voltage used for surface filling; and

controlling the welding torch not to open an arc, and verifying whether the welding angle is correct along the welding groove under the guidance of the tracking sensor; if the welding angle is correct, controlling the welding torch to open the arc and welding along a welding seam according to the verified welding angle.

The invention provides a twin wire welding system, which comprises:

a welding robot with a welding torch and a tracking sensor, wherein the tracking sensor is set on the welding torch, a first welding wire and a second welding wire are set in the welding torch, the first welding wire is connected to voltage used for root penetrating, and the second welding wire is connected to voltage used for surface filling; the welding robot is used to set a tracking angle range of the tracking sensor according to a groove angle, the tracking angle range comprises the groove angle, and the groove angle is the angle of a welding groove by overlapping an upper profile and a lower profile; the welding robot is used to set a welding angle of the welding torch according to the groove angle, the welding torch comprises a first welding wire and a second welding wire, the first welding wire is connected to voltage used for root penetrating, and the second welding wire is connected to voltage used for surface filling; and the welding robot is used to control the welding torch not to open an arc, verify whether the welding angle is correct along the welding groove under the guidance of the tracking sensor, control the welding torch to open the arc if the welding angle is correct, and weld along a welding seam according to the verified welding angle; and

a power supply device comprising a first power module and a second power module,wherein the first power module is connected with the first welding wire for providing voltage used for root penetrating for the first welding wire, and the second power module is connected with the second welding wire for providing voltage used for surface filling to the second welding wire.

An overlapping method of a welding groove, a twin wire welding method and a system thereof of the invention provides a twin wire welding way, with the welding torch comprising the first welding wire and the second welding wire, and under the condition of controlling the welding torch not to open the arc and verifying that the welding angle is correct along the welding groove under the guidance of the tracking sensor, which controls the welding torch to open the arc and weld along the welding seam according to the verified welding angle so as to realize both surface filling satiation and enough root penetration as well at a fan-shaped welding groove.

### BRIEF DESCRIPTION OF THE DRAWINGS

Fig. 1 shows an assembling two profiles which need to be welded together in prior art.

Fig. 2 shows a structural schematic view of an upper profile to be processed according to the present invention.

Fig.3 shows a structural schematic view of the processed upper profile according to the present invention.

Fig. 4 shows an assembling structural schematic view of a lower profile and the processed upper profile according to the present invention;

Fig. 5 shows a schematic view of an inclination angle in front-behind orientation of the welding torch according to the present invention;

Fig. 6 shows a schematic view of twin wire welding according to the present invention;

Fig. 7 shows a schematic view of cross section of the welding seam after performing the twin wire welding according to the present invention;

Fig. 8 shows a flow chart of an overlapping method of a welding groove according to the present invention;

Fig. 9 shows a flow chart of a twin wire welding method according to the present invention;

Fig. 10 shows a structural schematic view of a twin wire welding system according to the present invention.

### DETAILED DESCRIPTION

### EMBODIMENT 1

As for the problem that the welding groove formed by overlapping two profiles is appropriately the right angle in the prior art shown in Fig. 1, which is inconvenient for the welding torch to weld, the present invention provides an overlapping method of welding groove. Of course the method is applied to overlap the welding groove with the acute angle as well.

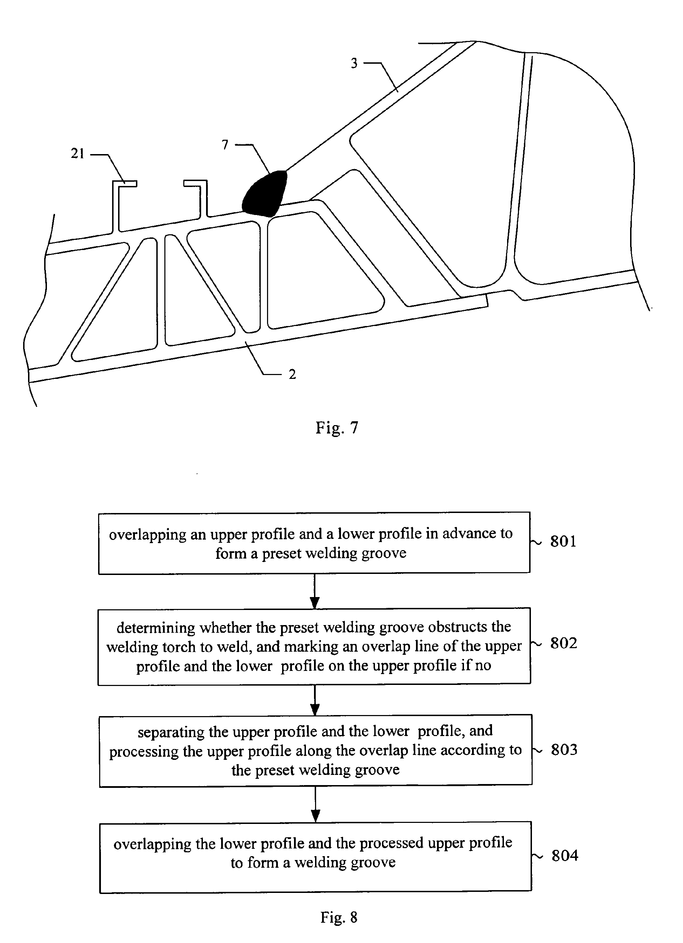

Fig. 8 shows a flow chart of an overlapping method of a welding groove according to the present invention. Referring to Fig. 8, the overlapping method of a welding groove of the present embodiment comprises:

Step 801, overlapping an upper profile and a lower profile in advance to form a preset welding groove;

For example, as shown in Fig. 1 in the prior art, the upper profile 1 and the lower profile 2 is lapped in advance to form a preset welding groove; The angle of the preset welding groove formed by overlapping the upper profile 1 and the lower profile 2 in Fig.1 is appropriately 90°.The angle which is appropriately 90° here is specifically 85°∼105°.

Step 802, determining whether the preset welding groove obstructs the welding torch to weld, and marking an overlap line of the upper profile and the lower profile on the upper profile if the preset welding groove does not obstruct the welding torch to weld;

The welding torch is placed into the preset welding groove and moved along the welding direction, so as to determine whether the preset welding groove obstructs the welding torch to weld. If the preset welding groove does not obstruct the welding torch to weld, the overlap line of the upper profile 1 and the lower profile 2 is marked on the upper profile 1. As for Fig. 1, if the angle of the preset welding groove is the acute angle less than 85°, the welding torch will be obstructed much more.

Step 803, separating the upper profile and the lower profile, and processing the upper profile along the overlap line according to the preset welding groove;

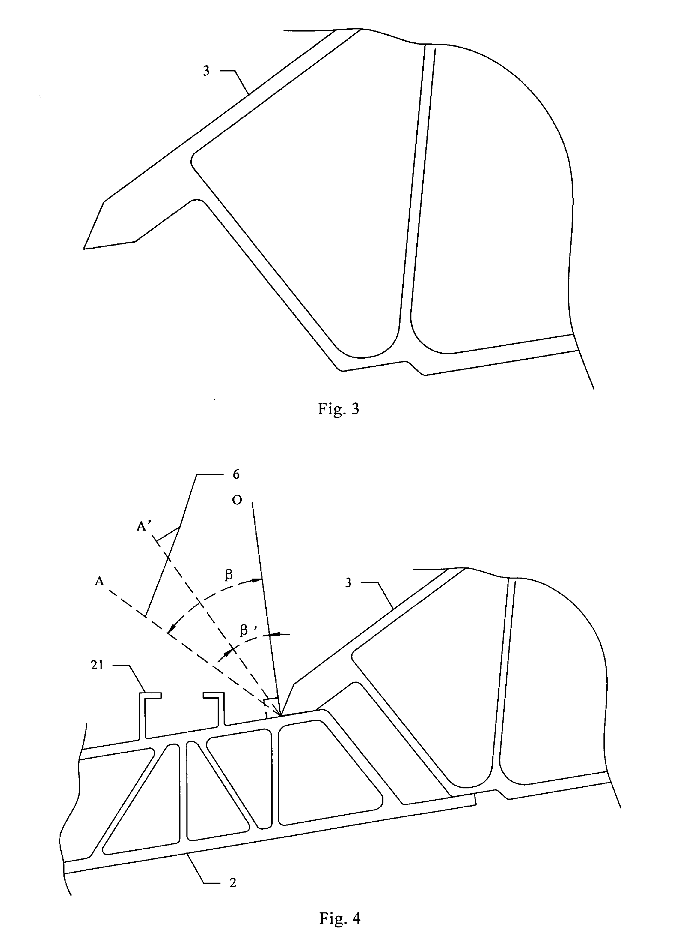

Next, the upper profile 1 and the lower profile 2 are separated apart, and Fig. 2 which is shown a structural schematic view of an upper profile to be processed according to the present invention and Fig.3 which is shown a structural schematic view of the processed upper profile according to the present invention are combined; the upper profile 1 is processed along the overlap line according to the actual angle of the preset welding groove. Specifically, an edge of the upper profile 1 is cut along the overlap line, and the dashed line B is taken as the cutting line to the upper profile 1; 3mm is cut at each side of the cut edge.

Step 804, overlapping the lower profile and the processed upper profile to form a welding groove.

Fig.4 which is shown an assembling structural schematic view of a lower profile and the processed upper profile according to the present the invention is combined, the groove angle of the welding groove formed by overlapping the lower profile 2 and the processed profile 3 is a wide angle which is specifically 120°∼ 150°. At that time, the central line 6 of the welding torch can be transferred from the position dash line A to the position dashed line A', and the U-shaped groove no longer obstructs the welding torch; and as 3mm is cut at each side of the cut edge, a fillet weld size for z3 is formed at the welding seam where the lower profile 1 and the processed upper profile 3 are welded together.

Furthermore, in step 802, if the preset welding groove does not obstruct the welding torch to weld, it is no need to process the upper profile 1 and/or the lower profile 2 in order to change the preset welding groove.

The overlapping method of a welding groove of the present embodiment overcomes the technical defects of inconvenient welding by the welding torch as the groove angle of the welding groove is appropriately the right angle or the acute angle in the prior art, and realizes the purpose to be convenient for the welding torch to weld by processing the upper profile along the overlap line according to the preset welding groove after determining whether the preset welding groove obstructs the welding torch to weld and then form the welding groove by overlapping the lower profile and the processed upper profile.

### EMBODIMENT 2

In the above embodiment 1, the welding groove with the wide angle is formed by the overlapping method of a welding groove so as to be convenient for the welding torch to weld. But as for this type of the welding groove with the wide angle, there is no corresponding welding method to weld it to guarantee the welding quality of the root penetration and the surface filling of the welding groove in the prior art.

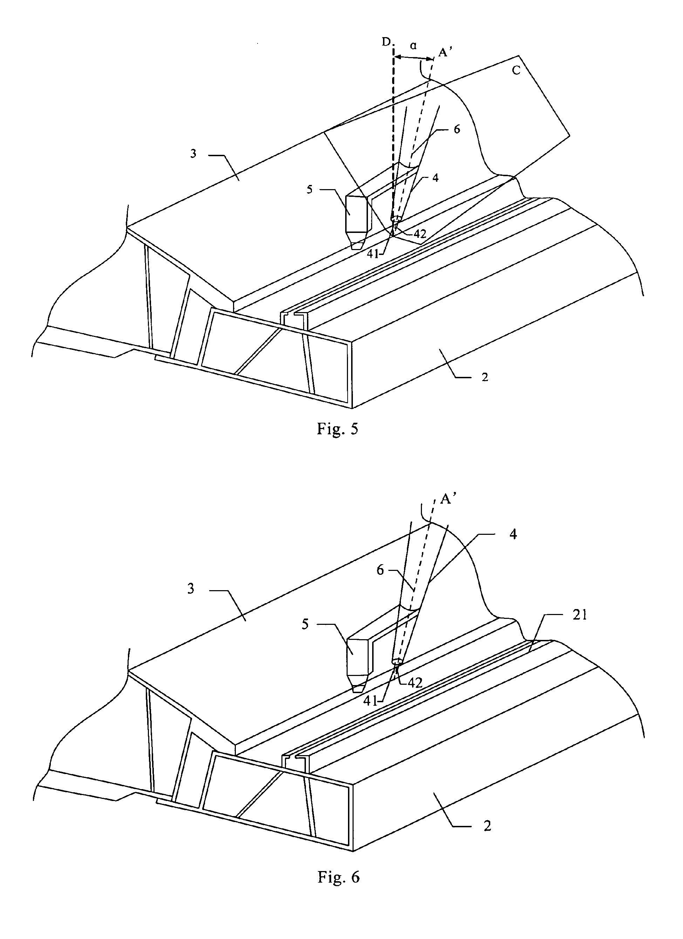

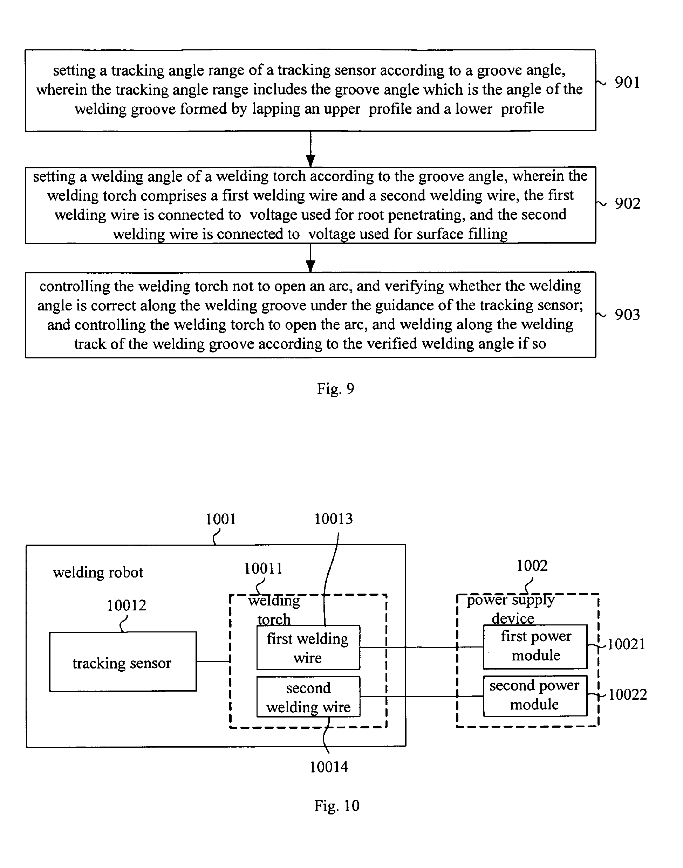

Based on the above description, the present embodiment provides a twin wire welding method by using a welding robot to do the welding work. Fig. 5 shows a schematic view of an inclination angle in front-behind orientation of the welding torch according to the present invention. Fig. 6 shows a schematic view of twin wire welding according to the present invention. Fig. 7 shows a schematic view of the cross section of the welding seam after performing the twin wire welding according to the present invention. Fig. 5, Fig. 6 and Fig. 7 are combined, and Fig. 9 shows a flow chart of a twin wire welding method according to the present invention, the twin wire welding method specifically comprises the following steps:

Step 901, setting a tracking angle range of a tracking sensor according to a groove angle, wherein the tracking angle range includes the groove angle which is the angle of the welding groove formed by overlapping an upper profile and a lower profile;

The processed upper profile 3 and the lower profile 2 may be held tightly by using a welding fixture and fixed by using spot welding. In the embodiment, the groove angle is 131°, and the tracking angle range of the tracking sensor 5 is set according to the groove angle.

For the welding groove with longer length, some straightness error exists as the welding groove is not present as a completely straight line in the whole length direction. If the welding torch of the welding robot welds according to a straight line formed by connection of two points, it might deviates the welding track in the process of moving forward. Therefore, the tracking sensor 5 needs to be installed on the welding torch when welding a longer welding track. The tracking sensor 5 can be a laser tracking sensor or a contact rod-shape mechanical tracking sensor. While as for the welding groove with the wide angle, the welding track of the welding groove can be tracked more accurately and stably by using the tracking sensor 5, so as to assure the welding torch not to deviate the welding track. Furthermore, before the tracking sensor 5 tracks the welding track, the tracking angle range of the tracking sensor 5 needs to be set firstly and be set to include the angle of a fan-shaped groove. The reason is that when the groove angle is approximate to be 90 ° in the prior art, the preset tracking angle range for the track sensor 5 to scan the welding groove is relatively small, such as 120°. If the tracking sensor 5 is still used to scan the welding groove with the angle of 131° according to the preset tracking angle range of 120°, and because the groove angle of the welding groove exceeds the scanning range of the preset tracking angle range of the tracking sensor 5, the tracking sensor 5 would deem that the welding groove is a plane. And according to related settings of the tracking sensor 5, the tracking sensor 5 would stop guidance if the tracking sensor 5 deems that the scanned part is a plane, which causes the welding torch stops welding. Therefore, it is a key prerequisite for its normal guidance to set the tracking angle range of the tracking sensor 5 to include the groove angle.

Step 902, setting a welding angle of a welding torch according to the groove angle, wherein the welding torch comprises a first welding wire and a second welding wire, the first welding wire is connected to voltage used for root penetrating, and the second welding wire is connected to voltage used for surface filling;

Fig. 4 and Fig. 5 are further combined, the welding angle in the present embodiment includes an inclination angle in front-behind orientation α and an inclination angle in left-right orientation β'. Because the central line 6 has transferred from the position dashed line A to the position dashed line A', so as to make the inclination angle in left-right orientation β' smaller than the inclination angle in left-right orientation β such that the welding torch 4 is no longer obstructed by the U-shaped groove 21, which is convenient for the welding. The following content illustrates the specific process for determining the inclination angle in front-behind orientation α and the inclination angle in left-right orientation β':

Firstly, a plane which is vertical to the processed upper profile 3 and the lower profile 1 and passes through the central line 6 of the welding torch 4 is created. The angle between the central line 6 and a projection line D formed on the plane by the projection of the central line 6 is set, and the angle is kept to be ranged of 15°∼ 18°; the angle between the central line 6 and the projection line D is the inclination angle in front-behind orientation α of the welding torch 4.

And the angle between the central line 6 and a vertical line O which is vertical to the lower profile 2 is set, and the angel is kept to be ranged of 35°∼ 40°; the angle between the central line 6 and the vertical line O is the inclination angle in left-right orientation of the welding torch 4.

The welding torch 4 includes the first welding wire 41 and the second welding wire 42. The first welding wire 41 is connected to the voltage used for root penetrating which can make the first welding wire 41 to generate short and concentrated electric arc. The voltage used for root penetrating is relative lower, and it can be ranged of 30∼32V and preferably is 31.5V.

The second welding wire 42 is connected to the voltage used for surface filling which can make the second welding wire to generate long and divergent arc. The voltage used for surface filling is relative higher, and it can be ranged of 33∼35V and preferably is 33.5V.

The first welding wire 41 is arranged in front of the second welding wire 42 along the direction of the welding track, so as to achieve the purpose that the short and concentrate electric arc generated by the first welding wire 41 is root penetrated firstly and then the long and divergent electric arc generated by the second welding wire 42 is surface filled, so as to meet the requirement for the welding quality of this type of welding groove with the wide angle.

Step 903, controlling the welding torch not to open an arc, and verifying whether the welding angle is correct along the welding groove under the guidance of the tracking sensor; and controlling the welding torch to open the arc, and welding along the welding track of the welding groove according to the verified welding angle if the welding angle is correct.

Firstly, the welding torch 4 is controlled not to open the arc and the preset inclination angle in front-behind orientation α and inclination angle in left-right orientation β' of the welding torch are verified whether meet the requirement of welding under the guidance of the tracking sensor 5 along the welding track of the welding groove. If the preset inclination angle in front-behind orientation α and inclination angle in left-right orientation β' of the welding torch meet the requirement of welding, the welding torch 4 is controlled to open the arc and the welding is done along the welding track of the welding groove according to the verified inclination angle in front-behind orientation α and the inclination angle in left-right orientation β'. The welding seam 7 after welding guarantees the welding quality of the root penetration and the surface filling. Specifically, in the welding process, the welding speed in the twin wire welding method of the present embodiment can be 1.6m/min; and argon gas with volume fraction of 99.99% can be used as protective gas in the welding process, so as to protect the electric arc from being exposed in the air and the flow rate of the proactive gas can be 20∼ 24L/min.

Furtherly, if the preset inclination angle in front-behind orientation α and inclination angle in left-right orientation β' of the welding torch are verified that they do not meet the requirement of welding under the guidance of the tracking sensor 5 along the welding track of the welding groove, the step 802 can be performed repeatedly, so as to adjust the inclination angle in front-behind orientation α and the inclination angle in left-right orientation β' time and again; and step 803 is performed to verify the inclination angle in front-behind orientation α and the inclination angle in left-right orientation β' after a further adjustment till the requirement of welding is meet; then the welding torch 4 is controlled to open the arc to weld.

The twin wire welding method of the present embodiment overcomes the technical defects caused by the fact that the single welding wire method used for the welding groove with the wide angle can not meet the quality requirements both for the root penetration and surface filling of the welding groove, and achieves the purpose for meeting the quality requirements both for the root penetration and surface filling of the welding groove by setting the welding angle of the welding torch according to the groove angle, wherein the welding torch includes the first welding wire and the second welding wire, the first welding wire is connected to voltage used for root penetrating, and the second welding wire is connected to voltage used for surface filling, controlling the welding torch to open the arc to weld after verifying that the welding angle is correct.

### EMBODIMENT 3

Fig. 10 shows a structural schematic view of a twin wire welding system according to the present invention. Referring to Fig. 10, the twin wire welding system of the present embodiment includes a welding robot 1001 and a power supply device 1002.

Wherein a welding torch 10011 and a tracking sensor 10012 are set on the welding robot 1001. The tracking sensor 10012 is set on the welding torch 10011. There is a first welding wire 10013 and a second welding wire 10014 set in the welding torch 10011. The first welding wire 10013 is connected to voltage used for root penetrating, and the second welding wire 10014 is connected to voltage used for surface filling. The power supply device 1002 inclues a first power module 10021 and a second power module 10022.

The welding robot 1001 is used to set tracking angle range of the tracking sensor 10012 according to a groove angle. The tracking angle range includes the groove angle, and the groove angle is the angle of the welding groove by overlapping upper profile and lower profile. A welding angle of the welding torch 10011 is set according to the groove angle. The welding torch 10011 is controlled not to open an arc, and whether the welding angle is correct is verified along the welding groove under the guidance of the tracking sensor 10012. If the welding angle is correct, the welding torch 10011 is controlled to open the arc, and welding is done along the welding track of the welding groove according to the verified welding angle.

The power supply device 1002 includes the first power module 10021 and the second power module 10022. The first power module 10021 is connected with the first welding wire 10013, and used to provide voltage used for root penetrating for the first welding wire 10013. The second power module 10022 is connected with the second welding wire 10014, and used to provide voltage used for surface filling to the second welding wire 10014.

The twin wire welding system of the present embodiment overcomes the technical defects caused by the fact that the single welding wire method used for the welding groove with the wide angle can not meet the quality requirements both for the root penetration and surface filling of the welding groove and achieves the purpose for meeting the quality requirements both for the root penetration and surface filling of the welding groove through that the welding robot sets the welding angle of the welding torch according to the groove angle, wherein the welding torch includes the first welding wire and the second welding wire, the first welding wire is connected to voltage used for root penetrating, the second welding wire is connected to voltage used for surface filling; and by controlling the welding torch to open the arc to weld after verifying that the welding angle is correct.

Finally, it should be noted that the presently disclosed embodiment should be considered in all respects to be illustrative and not restrictive. Though the preferred embodiments are described above in details, those skilled in the art should appreciate that they can modify the technical solution described in the forgoing embodiment or substitute parts technical features with equivalents. Any modification, equivalents without departing from the spirit and principle of the invention should be included in the scope of the invention.

## Claims

1. An overlapping method of a welding groove, comprising:
overlapping an upper profile and a lower profile in advance to form a preset welding groove;
determining whether the preset welding groove obstructs a welding torch to weld, and marking an overlap line of the upper profile and the lower profile on the upper profile if the preset welding groove does not obstruct the welding torch to weld;
separating the upper profile and the lower profile and processing the upper profile along the overlap line according to the preset welding groove;
overlapping the lower profile and the processed upper profile to form a welding groove.

2. The welding groove overlapping method of claim 1, wherein a groove angle of the welding groove is 120°∼ 150°.

3. The welding groove overlapping method of claim 1, wherein the processing the upper profile along the overlap line comprises: cutting an edge of the upper profile along the overlap line.

4. A twin wire welding method, comprising:
setting a tracking angle range of a tracking sensor according to a groove angle, wherein the tracking angle range comprises the groove angle which is an angle of a welding groove by overlapping an upper profile and a lower profile;
setting a welding angle of a welding torch according to the groove angle, wherein the welding torch comprises a first welding wire and a second welding wire, the first welding wire is connected to voltage used for root penetrating, and the second welding wire is connected to voltage used for surface filling; and
controlling the welding torch not to open an arc, and verifying whether the welding angle is correct along the welding groove under the guidance of the tracking sensor; and controlling the welding torch to open the arc and welding along welding track of the welding groove according to the verified welding angle if the welding angle is correct.

5. The twin wire welding method of claim 4, wherein the groove angle is 120°∼ 150°.

6. The twin wire welding method of claim 4, wherein the setting the welding angle of the welding torch according to the groove angle comprises:
setting an inclination angle in front-behind orientation of the welding torch formed by a central line of the welding torch and a projection line, wherein the projection line is projection of the central line on a plane, and the plane is vertical to the upper profile and the lower profile respectively and passes through the central line; and
setting an inclination angle in left-right orientation of the welding torch formed by the central line and a vertical line, wherein the vertical line is vertical to the lower profile.

7. The twin wire welding method of claim 6, wherein the inclination angle in front-behind orientation is 15°∼ 18°.

8. The twin wire welding method of claim 6, wherein the inclination angle in left-right orientation is 35°∼ 40°.

9. A twin wire welding system, comprising:
a welding robot with a welding torch and a tracking sensor, wherein the tracking sensor is set on the welding torch, a first welding wire and a second welding wire are set in the welding torch, the first welding wire is connected to voltage used for root penetrating, and the second welding wire is connected to voltage used for surface filling; the welding robot is used to set a tracking angle range of the tracking sensor according to a groove angle, the tracking angle range comprises the groove angle, and the groove angle is the angle of a welding groove by overlapping an upper profile and a lower profile; the welding robot is used to set a welding angle of the welding torch according to the groove angle, the welding torch comprises a first welding wire and a second welding wire, the first welding wire is connected to voltage used for root penetrating, and the second welding wire is connected to voltage used for surface filling; and the welding robot is used to control the welding torch not to open an arc, verify whether the welding angle is correct along the welding groove under the guidance of the tracking sensor, control the welding torch to open the arc if the welding angle is correct, and weld along welding track of the welding groove according to the verified welding angle; and
a power supply device comprising a first power module and a second power module, wherein the first power module is connected with the first welding wire for providing voltage used for root penetrating for the first welding wire, and the second power module is connected with the second welding wire for providing voltage used for surface filling to the second welding wire.
